(19) **Europäisches Patentamt**
**European Patent Office**
**Office européen des brevets**

(11) **EP 4 600 690 A1**

(12) **EUROPEAN PATENT APPLICATION**

(43) Date of publication:
**13.08.2025 Bulletin 2025/33**

(21) Application number: **24156220.6**

(22) Date of filing: **07.02.2024**

(51) International Patent Classification (IPC):
**G01S 7/35** (2006.01)   **G01S 13/34** (2006.01)
**G01S 13/536** (2006.01)   **H04B 1/69** (2011.01)
**G01S 13/10** (2006.01)

(52) Cooperative Patent Classification (CPC):
**G01S 13/347; G01S 7/356; G01S 13/536;**
H04B 2001/6912

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Vestel Elektronik Sanayi ve Ticaret A.S.**
**45030 Manisa (TR)**

(72) Inventors:
• **RAFIQUE, Saira**
  **45030 Manisa (TR)**
• **ARSLAN, Hüseyin**
  **45030 Manisa (TR)**

(74) Representative: **Grünecker Patent- und Rechtsanwälte PartG mbB Leopoldstraße 4 80802 München (DE)**

(54) **A SUB-NYQUIST HYPERBOLIC FREQUENCY MODULATED PULSED RADAR FOR ACCURATE RANGE AND DOPPLER ESTIMATION**

(57) Some embodiments in the present disclosure relate to transmitting and/or receiving of sensing. A waveform of a hyperbolic frequency modulated, HFM, chirp pulse in a frequency range is obtained. A first signal including a plurality of HFM chirp pulses is transmitted. A second signal is received, wherein the second signal is a signal resulting from reflection of the first signal by at least one target. A subsampled first signal is obtained by sampling the first signal at a sampling frequency $f_s$ below a Nyquist rate $f_{nyq}$. A subsampled second signal is obtained by sampling the second signal at the sampling frequency $f_s$. A range and/or a Doppler frequency is determined by processing of the subsampled first signal and the subsampled second signal.

**Fig. 7**

EP 4 600 690 A1

# EP 4 600 690 A1

**Description**

The present disclosure relates to sensing and, in particular, to radar sensing. The present disclosure provides methods and apparatuses for such sensing applications.

BACKGROUND

Wireless communication has been advancing over several decades now. Exemplary notable standards organizations include the 3rd Generation Partnership Project (3GPP) and IEEE 802.11, commonly referred to as Wi-Fi.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring.

Next generation of wireless communication networks may span a set of applications that include sensing as an integral part of them, in particular applications such as autonomous vehicles, intelligent transportation systems, and reflectometry-based internet-of-things (IoT) networks as well as sensors for smart cities. The inclusion of these critical sensing applications coupled with their specific requirements in future wireless networks has pushed the academic and industrial realms to design novel sensing prototypes that are not only compatible with current communication networks but also can operate in stand-alone mode for effective sensing functionality.

With emerging wireless standards of 3GPP and IEEE organizations such as 5G and beyond, IEEE 802.11bf, IEEE802.11bn, IEEE 802.11az and IMMWW study groups, the sensing and localization requirement becomes significantly important, particularly for emerging applications such as autonomous vehicles, virtual reality, autonomous robots, indoor positioning etc.

SUMMARY

The present invention relates to methods and apparatuses for radar sensing. In particular, the present disclosure provides a cost-effective method and device for sensing by exploiting unique aliasing phenomenon incurred by HFM pulses.

The invention is defined by the scope of independent claims. Some of the advantageous embodiments are provided in the dependent claims.

According to an embodiment, a radar sensing method is provided. The radar sensing method comprises obtaining a waveform of a hyperbolic frequency modulated, HFM, chirp pulse in a frequency range; transmitting a first signal including a plurality of HFM chirp pulses; receiving a second signal, the second signal being a signal resulting from reflection of the first signal by at least one target; obtaining a subsampled first signal by sampling the first signal at a sampling frequency $f_s$ below a Nyquist rate $f_{nyq}$; obtaining a subsampled second signal by sampling the second signal at the sampling frequency $f_s$; and determining a range and/or a Doppler frequency by processing of the subsampled first signal and the subsampled second signal.

According to an embodiment, a radar sensing device is provided. The radar sensing device comprises circuitry configured to obtain a waveform of a plurality of hyperbolic frequency modulated, HFM, chirp pulse in a frequency range; a transmitter configured to transmit a first signal including a plurality of HFM chirp pulses; and a receiver configured to receive a second signal, the second signal being a signal resulting from reflection of the first signal by at least one target, wherein the circuitry is further configured to obtain a subsampled first signal by sampling the first signal at a sampling frequency $f_s$ below a Nyquist rate $f_{nyq}$; obtain a subsampled second signal by sampling the second signal at the sampling frequency $f_s$; and determine a range and/or a Doppler frequency by processing of the subsampled first signal and the subsampled second signal.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

BRIEF DESCRIPTION OF DRAWINGS

An understanding of the nature and advantages of various embodiments may be realized by reference to the following figures.

| Fig. 1 | is a block diagram illustrating a basic communication system; |
|---|---|
| Fig. 2a | is an illustration of the evolution of a power spectrum of an LFM chirped pulse over time; |
| Fig. 2b | is an illustration of the evolution of a power spectrum of an HFM chirped pulse over time; |
| Fig. 3 | illustrates the folding effect as a folding process of the entire spectrum; |
| Fig. 4a | is an illustration of the evolution of a power spectrum of an undersampled LFM chirped pulse over time; |
| Fig. 4b | is an illustration of the evolution of a power spectrum of an HFM chirped pulse over time; |
| Fig. 5 | illustrates processing performed according to the present disclosure; |
| Fig. 6a | shows the range profile obtained when performing the signal processing on an undersampled LFM pulse; |
| Fig. 6b | shows the range profile obtained when performing signal processing on an undersampled HFM pulse; |
| Fig. 7 | illustrates a transceiver architecture for a monostatic HFM radar; |
| Fig. 8 | illustrates a schematic block diagram of a radar device according to the embodiment; |
| Fig. 9 | illustrates a block diagram of a specific implementation of a circuitry included in a radar sensing device according to the embodiment; |
| Fig. 10 | illustrates a radar sensing method according to an embodiment; |
| Fig. 11a | is a block diagram illustrating an exemplary apparatus for radar sensing; and |
| Fig. 11b | is a block diagram illustrating an exemplary memory for an apparatus for radar sensing. |

DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

Although the aforementioned techniques may be successful in some cases, they do not provide full information or awareness about the future spectrum or its usage. Meanwhile, wireless sensing is gaining popularity in commercial devices, for environment monitoring, health monitoring, and numerous other applications. Military use of wireless sensing such as radar has always been popular. Sensing applications generate signals, which may typically have a pattern different from those of some communication applications. For instance, most wireless sensing applications generate periodic signal transmissions of varying periodicity. However, not every signal is suitable for each scenario.

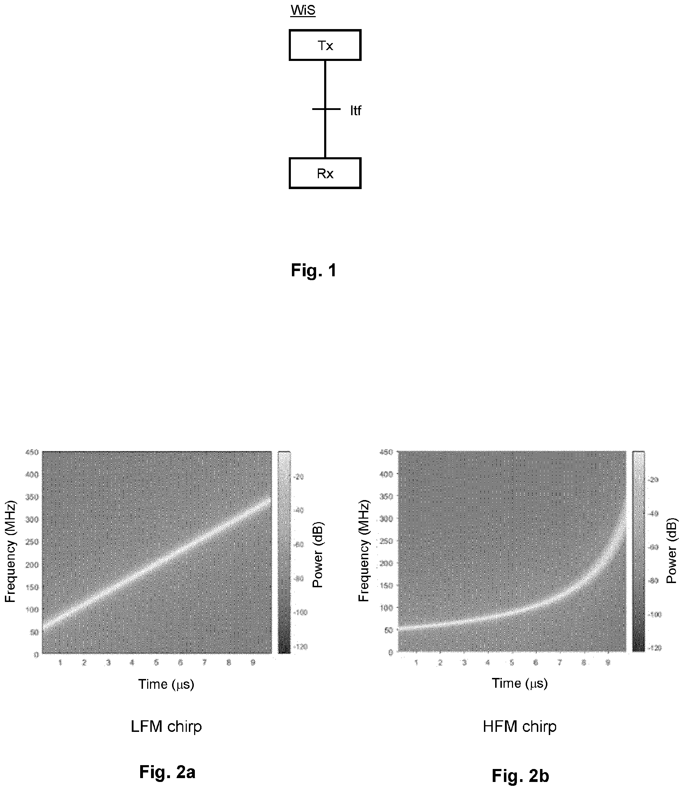

**Fig. 1** illustrates an exemplary wireless system WiS in which Tx represents a transmitter and Rx represents a receiver of the wireless signal. The transmitter Tx is capable of transmitting a signal to the receiver Rx or to a group of receivers or to broadcast a signal over an interface Itf. The interface may be any wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated into the same device. In other words, the devices Tx and Rx in Fig. 1 may respectively also include the functionality of the Rx and Tx.

The present disclosure is not limited to any particular transmitter Tx, receiver Rx and/or interface Itf implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11be or the like. The wireless signal is not necessarily a communication signal in the sense that it does not necessarily carry out human or machine communication. It may be, in particular, a sensing signal such as a radar signal or sounding a signal or any other kind of wireless signal from a sensing device such as some signal reporting sensing results to another device(s).

For instance, the amendment IEEE 802.11bf - Wireless Local Area Network (WLAN) Sensing - may include support for wireless sensing in WLAN networks. Some embodiments may be used to enhance the performance of devices complying with this standard, e.g. to reduce the amount of redundant sensing signals in an area or a network. The fifth-generation (5G) New Radio (NR) standard, 6G standards or other future standards may also apply wireless sensing as its part of future cellular communications networks. The present disclosure is also applicable to other communication technologies such as 3G or communication technologies under long-term evolution (LTE)/LTE Unlicensed (LTE-U).

Some embodiments of the present disclosure may facilitate the identification and prediction of sensing transmissions. The IEEE 802.22 and IEEE 802.15 standard support Cognitive Radio and may thus profit from the present disclosure. The present disclosure is also applicable to low-power wide-area network (LPWAN) technologies, as it aids in increasing power efficiency through reducing the number of redundant sensing transmissions. Thus, it is related to LPWAN standards such as Wize, ZigBee, NarrowBand IoT, and LoRaWAN. In general, some embodiments can be used in high frequencies - or millimeter waves (mm-waves) - as the spectrum availability and propagation characteristics are suitable for high-resolution wireless sensing. It can be used for managing resources for wireless sensing.

There may be separate devices including the functionality of the Rx and Tx, respectively. The transmitter Tx and receiver Rx may be implemented in any device such as a base station (eNB, AP) or terminal (UE, STA), or in any other entity of the wireless system WiS. A device such as a base station, access point, or terminal may implement both Rx and Tx. The present disclosure is not limited to any particular transmitter Tx, receiver Rx and/or interface Itf implementation. However, it may be applied readily to some existing communication systems as well as to the extensions of such systems, or to new communication systems. Exemplary existing communication systems may be, for instance, the 5G New Radio (NR) in its current or future releases, and/or the IEEE 802.11 based systems such as the recently studied IEEE 802.11 be or the like. Sensing applications signals may also be embedded within resources provided by one or more or the known systems such as some IEEE 802.11 standards or their possible specific extensions for supporting sensing applications.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring, and much more. Wireless sensing applications may require periodic or continuous sensing transmissions.

Wireless sensing is a process of obtaining information or awareness of the environment through measurements on received (e.g. reflected or directly received) electromagnetic signals. In this definition, processes such as radar, joint radar and communication, WLAN sensing, and other methods can be considered as wireless sensing methods. Most wireless sensing methods have either periodic or continuous transmission patterns. An example could be a radar, where a continuous signal or periodic pulses are transmitted. Another example could be channel state information (CSI) based WLAN sensing, where packets are transmitted with some periodicity.

For example, important signal characteristics for radar-based sensing may include periodicity, bandwidth, frequency, number of antennas and/or training sequences. In the CSI-based sensing, important signal characteristics may include, for example, periodicity, bandwidth, frequency and/or number of antennas.

The sensing transmissions may have a specific frame design or transmission mechanism, which is specific for some sensing application(s) and may vary based on the sensing application requirements and environment conditions. Periodicity is an important condition for sensing applications, as disruptions in the periodicity of transmitted/received signals due to interference from other devices, the inability to schedule transmissions, or access the channel using channel access protocols may cause a disruption of measurements. This may cause false alarms, missed detections, reduced resolution of sensed information, overall performance degradation of the sensing application. Depending on the application, this could have severe monetary consequences or life risks.

*Radar sensing*

Radar is contactless sensing method that has been widely adopted for many sensing applications. Radar sensing involves the use of radio waves to detect and characterize objects in the surrounding environment. It operates on the principle of emitting radio frequency signals, or radar pulses, and analyzing the echoes reflected off targets. By measuring the time delay and Doppler shift of these echoes, radar systems can determine the distance, speed, and direction of objects. Radar sensing finds widespread applications in various fields, including aviation, weather monitoring, defense, and automotive systems. Its versatility and ability to operate in different conditions make it a key technology for object detection, tracking, and navigation. Currently, radar may operate in two modes, namely continuous wave (CW) and pulsed radar and the mode of operation may be selected based on the application requirements.

*Continuous wave radar*

Continuous Wave (CW) radar is a radar system that utilizes a continuous transmission of radio frequency (RF) energy, in contrast to pulsed radar systems. This radar operates by emitting a continuous RF signal from the transmitter, and the receiver continuously monitors the reflections from targets.

Components of a CW radar system include, for example, a transmitter, an antenna, and a receiver. The transmitter generates a continuous RF signal, typically a sine wave, with a specific carrier frequency. The antenna is responsible for radiating this signal into space and receiving the reflections from targets. The receiver processes the received signals, thereby detecting distance information and velocity information of the one or more target.

When a target is in motion, the frequency of the reflected signal changes due to the relative motion between the radar and the target. The receiver is designed to detect this frequency shift, which is proportional to the target's radial velocity.

Frequency modulation (FM) is often employed in CW radar systems to enhance their performance. By varying the frequency of the transmitted signal, the radar can distinguish between the transmitted and received signals, facilitating the detection of the Doppler shift.

Linear frequency modulated continuous wave (LFMCW) is a well-known CW wave radar approach, wherein a signal whose frequency increases linearly with time is transmitted as the sensing signal.

The beat frequency, representing the difference in frequency between the transmitted and received signals, provides information about the target's velocity and distance. Continuous wave radar can determine the range to a target by measuring the phase difference between the transmitted and received signals. This is accomplished by comparing the phase of the transmitted signal with the phase of the received signal.

Advantages of continuous wave radar include simplicity and effectiveness in detecting moving targets, especially with the utilization of the Doppler effect. Continuous wave radar systems with frequency modulation offer enhanced capabilities for target detection and accuracy.

FMCW radars are suitable for sensing applications, specifically for sensing mobile targets such as autonomous vehicles, radio altimeters, military surveillance, and aircraft navigation due to their simple system architecture, ease of generation and processing in the analog domain, and low transmit power requirements as opposed to pulsed radar. However, the evolution of the automotive industry requires FMCW radars with improved range resolution and better range-Doppler separation

However, continuous wave radar also has limitations. It may suffer from range ambiguity, making it challenging to determine the exact distance to a target without additional techniques. Additionally, there can be limitations in range resolution, making it difficult to distinguish between closely spaced targets. The system is susceptible to interference from stationary objects (clutter), which may affect the accuracy of target detection.

*Range-Doppler coupling*

The issue of range migration due to the presence of Doppler shift is incurred by FMCW radars. This happens predominantly due to the parameterization of a chirp. The sweep duration of a chirp is calculated based on the time required for the signal to travel the maximum unambiguous range. Generally the sweep time for an FMCW radar system is considered as five to six times the round trip time. Moreover, an FMCW signal occupies a large bandwidth and choosing a sampling rate twice the bandwidth is impractical and it stresses the capability of analog-to-digital (A/D) converters. As FMCW radars calculate range and Doppler from the beat frequency corresponding to maximum range and Doppler frequency, the sampling rate may be selected to be twice the beat frequency.

The determined range of the target depends on the beat frequency, therefore an accurate estimation of beat frequency is required for precise range estimation. However in case of mobile target, the presence of Doppler shift alters the beat frequency which leads to a biased range estimation giving rise to the issue of range-Doppler coupling. It is worth mentioning here that fast chirps undergo insignificant range-Doppler coupling. Here, fast chirps refer to the FMCW signal that sweeps a large bandwidth in a short period of time. However, to generate fast chirps sweeping a larger bandwidth, digital generation of chirps is preferred which has its own limitations.

Additionally, the performance of FMCW radars also degrades in the presence of multiple targets due to the appearance of ghost targets. These constraints and limitations experienced by analog FMCW radars have pushed the need for developing FMCW radars in the digital domain with a large bandwidth and short time duration. Keeping in mind that the digital generation and processing of radar signals is gaining momentum using direct digital synthesizers (DDS) and field programmable gate arrays (FPGAs), however, designing FMCW radars with a large bandwidth and short time duration digitally requires expensive analog to digital converters (ADCs) with high sampling rates which is also a challenge for digital FMCW radars.

*Pulsed radar*

Pulsed radar is a radar system that operates by emitting short pulses of radio frequency (RF) energy and then listening for the echoes produced when these pulses encounter objects in the environment. This intermittent transmission and reception of pulses allow pulsed radar systems to determine various target characteristics, including range, velocity, and direction. The operation of pulsed radar involves several key components and principles.

A transmitter is responsible for generating short bursts or pulses of high-power RF energy. These pulses are typically characterized by specific pulse widths and repetition frequencies. The pulse width defines the duration of each emitted pulse, while the repetition frequency dictates how frequently these pulses are transmitted.

The antenna may serve a dual purpose in pulsed radar systems. It transmits the pulses into space during the transmission phase and receives the echoes reflected from potential targets during the reception phase. The design and characteristics of the antenna impact the radar system's beam shape, coverage, and resolution.

The receiver may be synchronized with the transmitter and is responsible for capturing, amplifying, and processing the echoes received by the antenna. It extracts valuable information from the received signals, such as the time delay between transmitted and received pulses, which is used to determine the range to the target. Additionally, the receiver can analyze the Doppler shift in the echoes to ascertain the velocity of moving targets.

The signal processor plays a crucial role in extracting meaningful information from the received signals. It processes the radar returns to determine target range, velocity, and other characteristics. Advanced signal processing techniques are often employed to filter out noise, mitigate interference, and enhance the accuracy of target detection.

The range to a target is calculated based on the time it takes for the radar pulse to travel to the target and back. By measuring the time delay between the transmitted and received pulses, the radar system can determine the distance to the target.

Pulsed radar can leverage the Doppler effect to detect the radial velocity of moving targets. The frequency shift in the echoes caused by the motion of the target provides information about its speed and direction.

In particular, ultra-wideband (UWB) pulsed Doppler (PD) radar systems may offer certain benefits over their CW counterpart in terms of high-range resolution and fine Doppler shift estimation by processing periodic narrow pulses in the time domain. The high-resolution range profile (HRRP) of radar targets is crucial for certain applications such as precise human localization and motion detection. Furthermore, security surveillance also requires the simultaneous detection of multiple targets. Additionally, UWB-PD radar can separate multipath propagation and transmit/receive coupling by time-gating the target echoes in the time domain making it suitable for through-wall human sensing applications.

However, the transmission of high-powered narrow pulses suffers from the issues of limited range. Increasing the duration of the pulses improves the detectability at the cost of compromised range resolution. Pulse compression techniques may be used to retain the HRRP of PD radars while improving the energy and detectability by transmitting intra-modulated long-duration pulses. Pulse compression is achieved by coding either the phase or frequency of the transmitted pulse.

*Chirps as sensing signals*

A chirp is a signal in which the frequency increases (up-chirp) or decreases (down-chirp) with time. For example, such a change in frequency may be linear or non-linear with time.

The frequency-time relation of a linear frequency modulated (LFM) chirp is shown exemplarily in **Fig. 2a,** wherein the instantaneous frequency increases linearly with time.

A non-linear frequency modulated (NL-FM) chirp includes a change in frequency that is, for example, quadratic, exponential, logarithmic, hyperbolic or the like. An exemplary frequency-time relation of a hyperbolic frequency modulated (HFM) chirp is shown in **Fig. 2b.**

In a sensing signal, where only LFM chirps are employed for sensing there are certain limitations. For example, the LFM chirp signal undergoes the problem of range-Doppler coupling, which may yield displacement in the estimation of the range of a target from its actual position due to the relative velocity of the object. Such errors in the range calculation can lead to erroneous target tracking.

A range-Doppler processing of a LFM chirp includes the process of dechirping where the received signal is mixed with the transmitted signal to get the beat signal. Afterwards, fast Fourier transform (FFT) is applied to the beat signal to obtain a range plot. Additionally, a two-dimensional fast Fourier transform (2D-FFT) can be applied to the beat frequency to obtain a range-velocity map.

*High range sidelobes*

The received echo signal from the target is matched to the transmit coding scheme which results in a large and compressed matched filter response. LFM-based pulse compression is preferred for most radar systems due to its simplicity and Doppler tolerance. However, it suffers from a high peak sidelobe level (PSL) of about -13 dB from the main lobe which reduces the detectability of targets with weaker echoes. Windowing may be used to suppress these range-sidelobes at the cost of reduced signal-to-noise ratio (SNR).

*High rate and expensive ADCs are required*

In addition to that, digital generation of broadband and fast LFM chirps requires high-rate analog-to-digital converters (ADCs) which are quite expensive. To meet the sensing requirements of several use cases, LFM chirps having large bandwidth and shorter duration are preferred, which can be generated digitally using modern equipment such as FPGAs and DDS. However, for the processing of such signals very high-rate and expensive ADCs are required. Sampling the received signals with even low rate ADCs not only results in low range-resolution but also result in ambiguous range measurement.

*Aliasing in LFM chirp pulses*

Sampling the transmitted LFM signal below the Nyquist rate leads to folding and aliasing, which creates range ambiguity, and the situation even worsens in the presence of multiple targets where it becomes challenging to distinguish original targets from the aliases. To overcome this issue, either filtering or high sampling rates are desired.

The use of hyperbolic frequency modulated (HFM) pulses provides significant gains over using their linear counterparts as it provides low range sidelobes. Additionally, due to inherent non-linearity, the aliasing phenomenon due to sub-Nyquist sampling in HFM chirps is unique. The distinct aliases don't affect the range and Doppler measurements, in contrast to the LFM pulses, hence making them a candidate for target parameter estimation at lower sampling rates.

*Match filtering*

Match filtering in radar processing is a signal processing technique employed to enhance the detection and extraction of specific target signals from radar returns. It is a critical component in radar systems for improving the signal-to-noise ratio and overall performance. The fundamental principle of match filtering involves convolving the received radar signal with a template or reference signal that precisely matches the expected characteristics of the target echo.

In essence, match filtering leverages the correlation between the received signal and the reference signal to maximize the detection of desired signals while minimizing the impact of noise and interference. The reference signal, often referred to as the matched filter, is designed to exhibit the same waveform as the expected target return. This design ensures that when the incoming signal correlates well with the reference, the output is maximized, leading to a more robust detection of the target.

By tailoring the matched filter to the anticipated characteristics of the target echo, match filtering improves the radar system's ability to discern weak signals against a noisy background. This technique is particularly advantageous in scenarios where the signal of interest is obscured by clutter or interference. Match filtering is commonly employed in pulse compression radar systems, where it aids in achieving higher range resolution and better target discrimination.

In summary, match filtering in radar processing is a correlation-based technique that optimizes the extraction of target signals by convolving the received radar signal with a specifically designed matched filter. This method plays a crucial role in enhancing detection capabilities, mitigating noise, and improving overall radar system performance.

*Stretch processing*

Stretch processing is a technique in radar signal processing that is employed to enhance range resolution in radar systems. This method is particularly valuable in scenarios where there is a need to distinguish closely spaced targets or achieve high precision in target location. The primary objective of stretch processing is to artificially increase the duration of transmitted radar pulses, effectively stretching them in time. Further, stretch processing reduces the required sampling rate.

In a conventional radar system, the transmitted pulse duration is limited by the need to achieve a desirable range resolution. However, this limitation can pose challenges when dealing with targets that are closely located in range. Stretch processing addresses this issue by transmitting longer pulses and compensating for the resultant range ambiguity through signal processing.

Upon reception, the stretched radar pulses undergo processing to compress them back to their original duration. This compression is achieved using matched filtering techniques, where the received signal is correlated with a reference signal that corresponds to the originally transmitted pulse. The correlation process enhances the signal-to-noise ratio and sharpens the range resolution, allowing for more precise determination of target locations.

By artificially extending the pulse duration during transmission and subsequently compressing the received signals, stretch processing effectively overcomes the trade-off between range resolution and unambiguous target detection. This technique is commonly utilized in radar systems for applications such as ground-based surveillance, weather monitoring, and target tracking, where high accuracy in range measurements is crucial.

In summary, stretch processing in radar involves the deliberate extension of transmitted radar pulses followed by matched filtering to compress the received signals. This method enables improved range resolution, facilitating the detection and localization of closely spaced targets in radar systems.

*Embodiment*

In the present disclosure, a novel technique is provided to achieve precise sensing information by using hyperbolic frequency-modulated (HFM) pulsed radar signal. The transmitted and received (reflected) HFM chirp is sampled below a Nyquist rate, which creates a folding and aliasing effect. Because of the non-linearity of the HFM pulse, the aliases are distinct. Therefore, after cross-correlation with the transmitted pulse as a reference signal, an accurate range may be detected despite sub-Nyquist sampling without employing additional filtering, in particular match filtering. Further, stretch processing may not be utilized.

The method of the present disclosure outperforms under-sampled digital LFM-pulsed radar both in single and multiple target scenarios. It is to be noted that stretch processing is not performed according to the present disclosure. Further, match filtering is not performed according to the present disclosure.

Undersampling, i.e. sampling a signal at a sampling frequency below the Nyquist rate, of a chirp pulse results in a folding type of aliases. For example, if a chirp signal is given by

$$x(t) = A\cos[2\pi\phi(t)],$$

where $A$ is the amplitude of an LFM or HFM chirp, and its modulating phase is $\phi(t)$ may be given by

$$\phi(t) = \begin{cases} f_L t + \frac{1}{2}\alpha t^2, & \text{LFM} \\ \frac{1}{\beta}\ln(1 + \beta f_L t), & \text{HFM} \end{cases},$$

for an LFM chirp pulse and an HFM chirp pulse, respectively.

In the above equations, $t$ denotes time, $\alpha = \frac{f_H - f_L}{T}$, and $\beta = \frac{f_L - f_H}{f_L f_H T}$ represent the slope $\alpha$ and frequency modulation coefficient $\beta$ of the chirp pulse, respectively. $f_L$ denotes the starting frequency, e.g. the lower frequency of the chirped pulse, and $f_H$ denotes the ending frequency, e.g. the higher frequency of the chirped pulse. $T$ denotes the chirp duration. As can be seen from above equation, for example, the HFM chirp pulse exhibits a modulating phase $\phi(t)$ proportional to $\ln(f(t))$, with $f(t)$ being a function linear in time $t$. The instantaneous frequency $f(t) = \frac{d\phi(t)}{dt}$ of an LFM chirp pulse and an HFM chirp pulse is given by

$$f(t) = \begin{cases} f_L + \alpha t, & \text{LFM} \\ \frac{f_L}{1 + \beta f_L t}, & \text{HFM} \end{cases}.$$

**Fig. 2a** is an illustration of the evolution of a power spectrum of an LFM chirped pulse over time, wherein the instantaneous frequency as mathematically described in above equation (for LFM) increases linearly with time from a lower frequency $f_L$ at the beginning of the chirped pulse to an upper/high frequency $f_H$ at the end of the pulse.

**Fig. 2b** is an illustration of the evolution of a power spectrum of an HFM chirped pulse over time, wherein the instantaneous frequency as mathematically described in above equation (for HFM) increases non-linearly with time from a lower frequency $f_L$ at the beginning of the chirped pulse to an upper/high frequency $f_H$ at the end of the pulse.

However, the present disclosure is not limited to said modulating phases. In case of an LFM pulse, the instantaneous frequency may as well decrease linearly with time. Similarly, the instantaneous frequency of an HFM pulse may decrease over time. That is, the instantaneous frequency may start at a high/upper frequency $f_H$ and end at a low/lower frequency $f_L$.

In other words, an instantaneous frequency of an HFM chirp pulse may increase monotonously with time from a lower frequency $f_L$ of the frequency range to an upper frequency $f_H$ of the frequency range, or decrease monotonously with time from an upper frequency $f_H$ of the frequency range to a lower frequency $f_L$ of the frequency range.

For example, the modulating phase of an HFM pulse may be also given by $\phi(t) = \frac{1}{\beta}\ln(1 - \beta f_H t)$, which describes an HFM pulse with a monotonously decreasing instantaneous frequency.

In order to be able to reconstruct a baseband chirp perfectly from a sampled signal, the chirp has to be sampled at a certain minimum sampling frequency. When the sampling frequency is denoted by $f_s$, frequencies beyond the frequency $f_s/2$, which is also called the folding frequency, are folded down into the frequency band between zero and $f_s/2$.

For instance, when the baseband chirp occupies a bandwidth $B = f_H - f_L$, the minimum sampling frequency is given by $f_{s,min} = 2B$, which may also be referred to as the Nyquist frequency or Nyquist rate. In other word, the Nyquist criterion is satisfied when the baseband signal occupies the interval $[0, f_s/2]$.

In general, the Nyquist rate is a concept in signal processing and digital communications. It refers to the minimum sampling rate/sampling frequency required to accurately represent a continuous signal in its digital form without introducing aliasing, which may be considered as a misinterpretation of high-frequency components as lower frequencies.

In an example, where the frequencies of the baseband chirp occupy a bandwidth $B$ from $f_L$ to $f_H$, a Fourier transform of the baseband chirp may be given by

$$X(f) = 0 \ \forall f \notin \ [-f_H, -f_L] \cup [f_L, f_H].$$

In other words, there are no frequency components outside of the given baseband.

In this case, another condition has to be satisfied in order to be able to reconstruct the baseband signal without any aliases being folded into the bandwidth. Said condition is given by

$$\frac{f_H}{k} < \frac{f_s}{2} < \frac{f_L}{k-1}, \ \text{with } k \in \mathbb{K}^*; \ k \leq \left\lfloor \frac{f_H}{B} \right\rfloor.$$

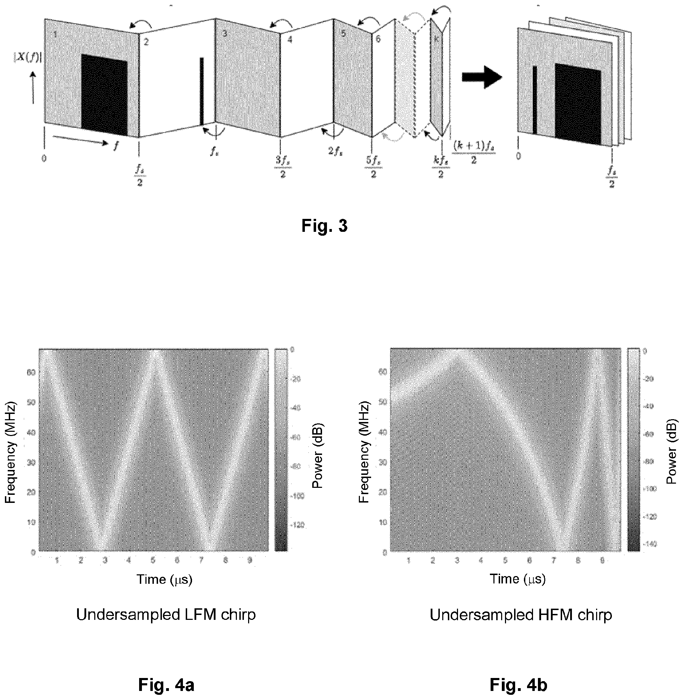

The folding occurring when an LFM pulse and an HFM pulse are sampled below the Nyquist rate is illustrated in Figs. 3, 4a and 4b.

**Fig. 3** illustrates the folding effect as a folding process of the entire spectrum, wherein a so-called "fanfold" paper tool illustrates the folding at each multiple of $f_s/2$. When sampled below the Nyquist rate, aliasing folds the signal forward in the odd-numbered sheets of the fanfold paper and backwards in the even sheets. Additionally, when undersampling an HFM pulse, the width of each page decreases gradually due to the slope of the instantaneous frequency not being constant. However, for a linear chirp, the width of the sheets remains constant throughout the complete range of frequencies. Details on the illustration of the fanfold paper representation can be found, for example, in Yang, C. Dorn, T. Mancini, Z. Talken, S. Nagarajaiah, G. Kenyon, C. Farrar, and D. Mascarenas, "Blind identification of full-field vibration modes of output-only structures from uniformly-sampled, possibly temporally-aliased (sub-nyquist), video measurements," Journal of Sound and Vibration, vol. 390, pp. 232-256, 2017.

**Fig. 4a** is an illustration of the evolution of a power spectrum of an undersampled LFM chirped pulse over time, wherein the instantaneous frequency as mathematically described in above equation (for LFM) increases linearly with time from a lower frequency $f_L$ at the beginning of the chirped pulse to an upper/high frequency $f_H$ at the end of the pulse. Due to the undersampling, the power spectrum is then folded into the frequency band, resulting in the frequency of the maximum of the power spectrum periodically decreasing and increasing linearly in time.

When an LFM chirp is sampled below the Nyquist rate, that is, when the LFM chirp is undersampled with a frequency $f_s = \eta \times f_{nyq}$ with $\eta$ being within the interval $(0,1)$ and the Nyquist frequency being given by $f_{nyq} = 2B$, the instantaneous frequency of the LFM chirp can be expressed as

$$f_{d,L}(t) = \begin{cases} f_L + \alpha t, & 0 \leq t \leq \left(\eta - \frac{f_L}{B}\right)T \\ f_s - \alpha t, & \left(\eta - \frac{f_L}{B}\right)T \leq t \leq \left(2\eta - \frac{f_L}{B}\right)T \\ f_s + \alpha t, & \left(2\eta - \frac{f_L}{B}\right)T \leq t \leq \left(3\eta - \frac{f_L}{B}\right)T \end{cases}.$$

In this expression, $N$ is the total number of samples per chirp pulse and is given by $N = T/T_s$, with $T$ being the pulse duration and $T_s = 1/f_s$. Further, the time instances are given by $t = nT_s$ with $0 \leq n \leq N$. For the duration of the LFM chirp pulse, said expression is extended for the duration of the chirp pulse, wherein the instantaneous frequency changes its slope from positive to negative or vice versa after each time period of $\eta T$ (The term $-\frac{f_L}{B}$ in the equation above accounts for an offset caused by the starting frequency $f_L$). That is, when an LFM chirp pulse is undersampled, each of the folded and aliased components of the undersampled signal occupy equidistant time intervals

**Fig. 4b** depicts the temporal evolution of a power spectrum corresponding to a HFM chirped pulse. The instantaneous frequency, as defined by the mathematical expression provided above for an HFM pulse, exhibits a non-linear increase over time. Commencing at a lower frequency $(f_L)$ at the initiation of the chirped pulse, it progressively rises to an upper/high frequency $(f_H)$ towards the pulse's conclusion.

The phenomenon of undersampling leads to the folding of the power spectrum into the frequency band, resulting in periodic fluctuations of the maximum power spectrum frequency over time. It is noteworthy that the temporal modulation of frequency differs from that observed in a Linear Frequency-Modulated (LFM) pulse; the HFM pulse exhibits non-linear variations in frequency, deviating from a linear progression.

Specifically, when an HFM chirp is undersampled, the duration of the folded and aliased components decreases after each multiple of $f_s/2$. This is due to the inherent structure of a non-linear HFM chirp, where the absolute value of the slope of the instantaneous frequency is not constant. When expressed mathematically, the instantaneous frequency of an HFM up-chirp sampled at $f_s$ is given by

$$f_{d,H}(t) = \begin{cases} \frac{f_L}{1+\beta f_L t}, & 0 \le t \le T_a \\ \frac{f_s}{1-\beta f_s t}, & T_a \le t \le T'_b \\ \frac{f_s}{1+\beta f_s t}, & T'_b \le t \le T'_c \end{cases}.$$

Similarly to the expression of the LFM chirp, $t = nT_s$ and $0 \le n \le T/T_s$. The times $T_a$, $T_b$, and $T_c$ are given by

$$T_a = \frac{f_L - f_s/2}{f_L \times f_k/2 \times \beta},$$

$$T_b = \frac{f_s/2 - f_s}{f_s/2 \times f_s \times \beta},$$

and

$$T_c = \frac{f_s - 3f_s/2}{f_s \times 3f_s/2 \times \beta},$$

with $T_a < T_b < T_c$ and $Tb = T_a + T_b$ as well as TJ = $Tb + T_c$. The minus-sign associated with $\alpha$ and $\beta$ in the instantaneous frequency expressions for the LFM and the HFM chirps represent the folded components of the undesampled LFM and HFM chirp pulses, that are folded into the frequency range $[0, f_s)$.

The present disclosure relates to transmitting and/or receiving of sensing. A waveform of a hyperbolic frequency modulated, HFM, chirp pulse in a frequency range is obtained. A first signal including a plurality of HFM chirp pulses is transmitted. A second signal is received, wherein the second signal is a signal resulting from reflection of the first signal by at least one target. A subsampled first signal is obtained by sampling the first signal at a sampling frequency $f_s$ below a Nyquist rate $f_{nyq}$. A subsampled second signal is obtained by sampling the second signal at the sampling frequency $f_s$. A range and/or a Doppler frequency is determined by processing of the subsampled first signal and the subsampled second signal.

In an example implementation using a monostatic radar transceiver transmitting a radar signal comprising $P$ intra-modulated HFM chirp pulses, each exhibiting a pulse duration of $T_p$, a single HFM chirp pulse with a constant envelope $u_1(t)$ and unit energy may be expressed as

$$u_1(t) = \text{rect}\left(\frac{t}{T_p}\right) \cos\left(\frac{2\pi}{\beta} \ln(1 + \beta f_L t)\right),$$

with

$$\beta = \frac{f_L - f_H}{f_L f_H T_p},$$

and

$$\text{rect}\left(\frac{t}{T_p}\right) = \begin{cases} 1, & |t| \leq T_p/2 \\ 0 & \text{otherwise} \end{cases}.$$

A uniform pulse train $u(t)$, i.e. a signal including a plurality of HFM pulses temporarily separated by $\tau_p$, may then be expressed as

$$u(t) = \frac{1}{\sqrt{P}}\sum_{p=0}^{P-1} u_1\left(t - p\tau_p\right).$$

In this expression, $\tau_p$ denotes the inter-pulse period, which may also be referred to as pulse repetition interval (PRI). Its reciprocal $1/\tau_p$ is a term referred to as pulse repetition frequency (PRF). In an exemplary situation, where the radar scene comprises $L$ Swerling 0 targets and $L$ is assumed to be known, each pulse may be reflected by each of the $L$ tagets. Each target $l$ of the $L$ targets may be defined by three parameters, namely a round trip time delay $\tau_l$ related to the distance of the target from the transmitter, Doppler shift $f_{Dl}$ related to the target's radial velocity, and a complex scatter coefficient $\alpha_l$ which is related to the target's radar cross-section (RCS) and other propagation phenomena. After back-propagation to the transmitter of the radar signal, the received (reflected) signal at the receiver may be expressed as

$$x(t) = \sum_{p=0}^{P-1}\sum_{l=0}^{L-1} \alpha_l u_1\left(t - \tau_l - p\tau_p\right)e^{-j2\pi f_{Dl}p\tau_p} + w(t).$$

In this expression, $w(t)$ denotes an additive noise distribution and may be assumed as being white Gaussian noise of average value of zero and a variance $\sigma$. That is, $w(t)$ is proportional to $CN(0, \sigma^2)$ (Complex Normal Distribution). In a simplified expression, the received signal may be expressed as a sum of $P$ individual pulses, i.e.:

$$x(t) = \sum_{p=0}^{P-1} x_p(t) + w(t),$$

with

$$x_p(t) = \sum_{l=0}^{L-1} \alpha_l u_1\left(t - \tau_l - p\tau_p\right)e^{-j\pi f_{Dl}p\tau_p}.$$

When performing digital processing on wideband pulses, commonly a high sampling rate, conforming with the Nyquist criterion, is applied. This, however, strains the capabilities of common analog-digital converters. On the other hand, sampling below the Nyquist rate leads to aliasing, which might affect the accuracy of target parameters deduced from the received pulses.

For these reasons, according to the present disclosure, HFM chirp pulses are used in the transmitted radar signal, the reflected and received signals are undersampled (i.e. sampled with a sampling frequency below the Nyquist rate), and the target parameters are deduced using the undersampled received radar signal, e.g. without further filtering like match filtering.

Due to due to the inherent structure of HFM pulses, they generate distinct aliases when sampled below the Nyquist rate. However, as shown below, radar targets may be detected, even if subsampling of the HFM pulses is performed, without creating ambiguity in the detected parameters related to the $L$ targets.

A received undersampled pulse $p$ for a target $l$ at the output of the transceiver's ADC may be expressed as

$$x_p[nT_s] = \begin{cases} \alpha_l\cos\left(\frac{2\pi}{\beta}\right)\ln\left(1 + \beta f_L\left(nT_s \quad \cdot \quad -\tau_l - p\tau_p\right)\right)e^{-j2\pi f_{Dl}p\tau_p}, \\ \qquad\qquad\qquad\qquad\qquad\qquad\qquad 0 \leq nT_s \leq T_a \\ \alpha_l\cos\left(\frac{2\pi}{\beta}\right)\ln\left(1 - \beta f_s\left(nT_s - \tau_l - p\tau_p\right)\right)e^{-j2\pi f_{Dl}p\tau_p}, \\ \qquad\qquad\qquad\qquad\qquad\qquad\qquad T_a \leq nT_s \leq T_b' \\ \alpha_l\cos\left(\frac{2\pi}{\beta}\right)\ln\left(1 + \beta f_s\left(nT_s - \tau_l - p\tau_p\right)\right)e^{-j2\pi f_{Dl}p\tau_p}, \\ \qquad\qquad\qquad\qquad\qquad\qquad\qquad T_b' \leq nT_s \leq T_c' \end{cases}$$

for $0 \leq n \leq T/T_s$. The addition of noise $w(t)$ is omitted for simplicity.

For performing range estimation, each of the received undersampled pulses $s_p[n] = x_p[nT_s]$ is cross-correlated

with a reference signal in order to extract the range profile for the L targets. The reference signal is the undersampled transmitted signal/HFM pulse. That is, the transmitted signal and the received signal may be converted by a common analog-gigital converter prior to range estimation. When assuming that the term $e^{-j2\pi f_{D|P}\tau_p}$ does not change over the pulse duration $T_p$, the pulse duration is much smaller than the inter-pulse period $\tau_p$, and $f_{Dl}$ is known within $1/\tau_p$, the result of cross-correlation for a single pulse can be approximated as

$$y_p[m_l] = \sum_{n=0}^{N} s_p[n] * u_1^*[n - m_l] \, m_l - 0,1, ..., N - 1.$$

In this expression, $u_i^*[n - m_l]$ is the conjugate of the transmitted pulse delayed by $m_l$ samples, corresponding to the $l$ targets. The delay $\tau_l$ can be determined as $\tau_l = m_l/f_s$. The distance of a target from the transceiver can thus be calculated as $R_l = \tau_l \times c/2$, with $c$ being the propagation speed of the signal ($c \approx 3 \times 10^8 ms^{-1}$).

Further, in order to obtain the Doppler frequencies, the cress-correlation processing provides range bins for the $P$ ulses. A (discrete) Fourier transform (DFT) applied along the range bins allows for extraction of the Doppler frequencies $f_{D,l}$ of the $L$ targets. For example, a $P$-point DFT applied along the range bins for each discrete time index $m_l$ may be given by

$$z_n[k] = DFT_P\{y_p[m_l]\} = \sum_{p=0}^{P-1} y_p[m_l] e^{-j2\pi pk/P}.$$

In this expression, $k$ lies in a range defined by $0 \leq k < P$. Through this step, a frequency resolution of $1/P\tau_p$ may be achieved, which corresponds to the inverse of the total coherent processing interval.

Although an example was described, wherein a monostatic radar transceiver is utilized, the present disclosure is not limited thereto. A receiver and a transmitter may compose the transceiver. Further, for example, a bistatic radar system may be utilized. In this case, the geometric relationship between the transmitter and the receiver may be taken into account when determining the range profile, the Doppler frequency and respective velocities.

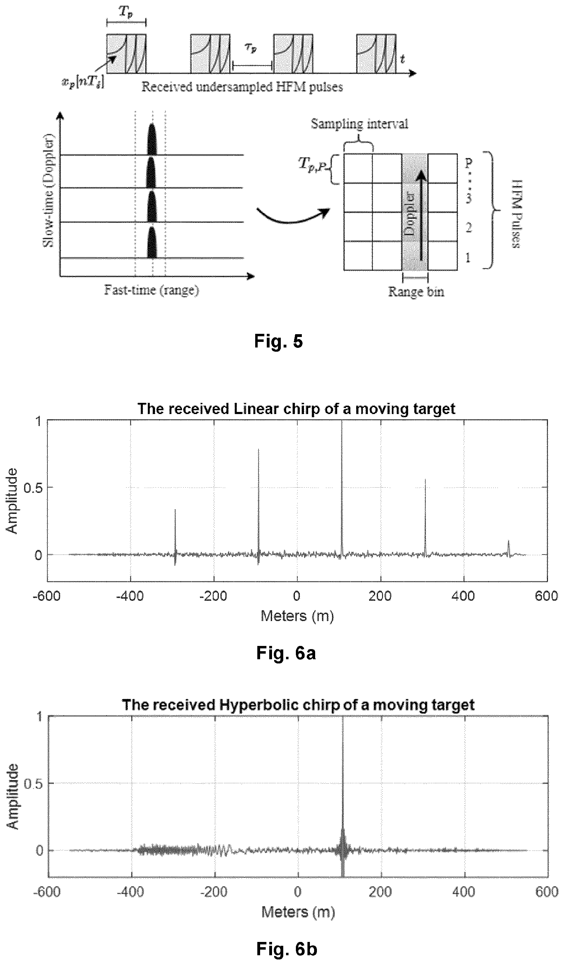

**Fig. 5** illustrates the processing performed according to the present disclosure. The upper portion of the figure illustrates the power spectrum as a function of time for a plurality of received undersampled HFM pulses. Each pulse exhibits a pulse duration of $T_p$, wherein the pulses are temporarily separated by $\tau_p$.

The processing of the subsampled received signal and the subsampled transmitted signal (e.g. the reference signal) includes extracting a range profile by cross-correlating each of pulses included in the subsampled received signal with a pulse included in the subsampled transmitted signal, thereby providing range bins for the transmitted plurality of HFM chirp pulses.

An example of a result of such processing is illustrated in Fig. 6a and 6b. **Fig. 6a** shows the range profile obtained when performing the signal processing on an undersampled LFM pulse. As it is apparent from the figure, a precise range cannot be detected due to the presence of aliasing and folding components, which result in multiple peaks being present in the range profile. On the other hand, **Fig. 6b** shows the range profile obtained when performing signal processing on an undersampled HFM pulse. As it is apparent from the range profile, there is only one distinct peak in the range profile, allowing for a range to be extracted accurately.

Again with reference to **Fig. 5**, from the processing of the train of received pulses, a data matrix may be obtained, as illustrated in the lower left portion of the figure. The fast axis refers to the different time slots composing a PRI, which is sampling rate dependent. The time updates every PRI.

The processing of the subsampled transmitted signal and the subsampled received signal may further include extracting a Doppler frequency by performing a Fourier transform along the range bins. For example, this is achieved by performing a Fourier transformation along the slow time, as illustrated in the lower right portion of Fig. 5. Summarizing, in other words, a Range-Doppler map may be obtained by converting the fast time to a range and the slow time to a Doppler frequency by applying a Fourier transform. Using the received Doppler frequency, respective velocities of targets $l$ may be calculated.

With the approach of the present disclosure, that is, by using sub-sampled HFM chirp pulses in radar sensing, a lower samping rate, for instance a sampling rate below the Nyquist rate, can be utilized. This allows, for instance, the use of a single common ADC for sampling the transmitted and the received radar signal. Specifically, after sampling at sub-Nyquist rate, an HFM chirp exhibits a unique type of folding and aliasing phenomenon where each folded and aliased component occupies different time duration, which doesn't create measurement ambiguities as it does for undersampled LFM chirp.

Further, an accurate range and an accurate Doppler frequency may be obtain. Specifically, the sub-Nyquist HFM radar may provide accurate range and Doppler estimation at the cost of range resolution.

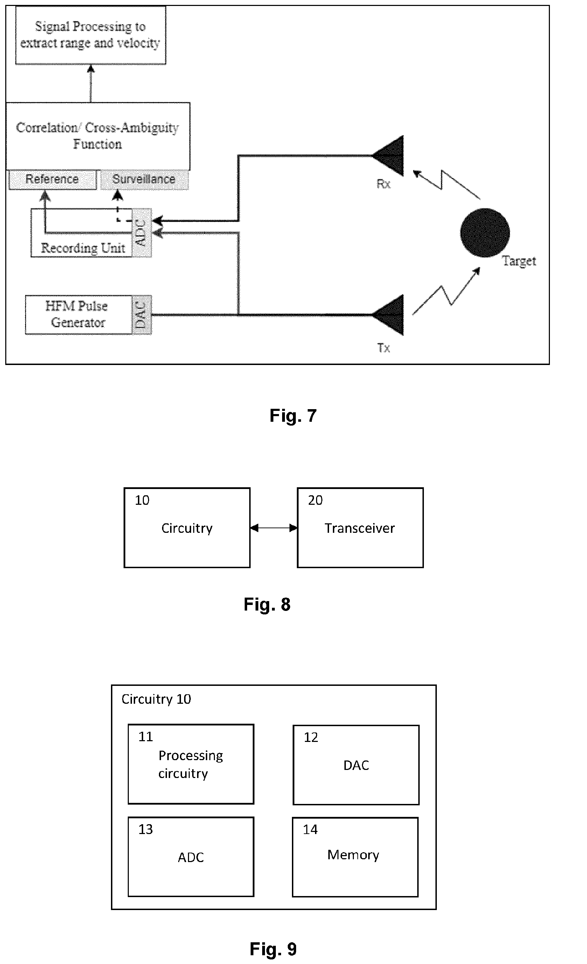

**Fig. 7** illustrates a transceiver architecture for a monostatic HFM radar. An HFM pulse generator determines a train of waveforms of HFM chirp pulses in a certain frequency range. The HFM chirp pulses may exhibit a modulating phase of an HFM pulse as provided further above, for example. The train of waveform is then processed by a digital-analog converter to an analog signal (first signal), which is transmitted as a radio wave by a transmitter Tx. When reflect by a target and back-propagated to the HFM radar, the reflected radio wave is received by a receiver Rx. It is noted that the transmitter Tx and the receiver Rx may be configured as a transceiver. The received signal (second signal) as well as the first signal is fed to an analog-digital converter (ADC) which performs AD processing, wherein the signals are sampled with a sampling frequency below the Nyquist rate. In other words, the first and second signal are undersampled. Further, the undersampled first and second signals are stored in a recording unit. A correlation/cross-ambiguity function utilizes the undersampled first signal and the undersampled second signal (reference signal and surveillance signal) and performs cross correlation processing as described above, to obtain a data matrix as exemplarily illustrated in the lower left portion of Fig. 5. Subsequently, signal processing is performed on to extract the range profiles and the Doppler frequencies/velocities of the targets.

Although a monostatic system setup is described in Fig. 7, the present disclosures is not limited thereto. For example, a bistatic radar setup may be used, with signal processing for extraction of the range profiled and the Doppler frequency being adapted accordingly.

**Fig. 8** illustrates a schematic block diagram of a radar device according to the embodiment. The radar device comprises circuitry 10 configured to obtain a waveform of a plurality of hyperbolic frequency modulated, HFM, chirp pulse in a frequency range. The radar device further comprises a transceiver 20 configured to transmit a first signal including a plurality of HFM chirp pulses; and to receive a second signal, wherein the second signal is a signal resulting from reflection of the first signal by at least one target. The circuitry 10 is further configured to obtain a subsampled first signal by sampling the first signal at a sampling frequency $f_s$ below a Nyquist rate $f_{nyq}$; to obtain a subsampled second signal by sampling the second signal at the sampling frequency $f_s$; and to determine a range and/or a Doppler frequency by processing of the subsampled first signal and the subsampled second signal.

The circuitry 10 may implement the functionality of the HFM pulse generator, the digital-analog converter, the analog-digital converter, the recording unit, the correlation/cross-ambiguity function and the signal processing as illustrated in Fig. 7. The transceiver 20 may implement the functionality of the transmitter Tx and the receiver Rx as illustrated in Fig 7.

Further, the circuitry 10 and the transceiver 20 may implement the processing and functions described with reference to Figs. 5 and 6b.

**Fig.9** illustrates a block diagram of a specific implementation of a circuitry included in a radar sensing device according to the embodiment. The circuitry 10 comprises processing circuitry 11, a digital-analog converter DAC 12, an analog-digital converter ADC 13, and memory 14. The processing circuitry 12 may implement the functionality of the HFM pulse generator, the correlation/cross-ambiguity function, and the signal processing as illustrated in Fig. 7. The DAC 12 and the ADC 13 may implement the functionality of respective converters of Fig. 7. The memory 14 may implement the functionality of the recording unit of Fig. 7.

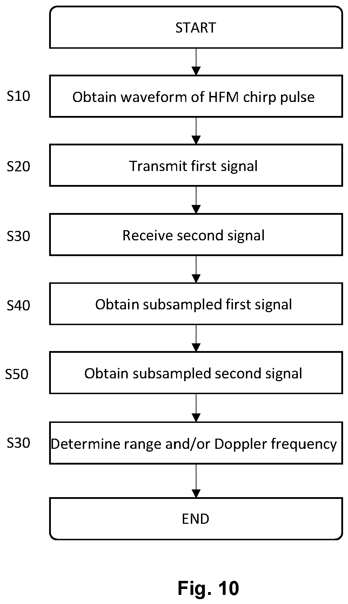

**Fig. 10** illustrates a radar sensing method according to an embodiment. The method comprises obtaining a waveform of a hyperbolic frequency modulated, HFM, chirp pulse in a frequency range in step S10; transmitting a first signal including a plurality of HFM chirp pulses in step S20; receiving a second signal, the second signal being a signal resulting from reflection of the first signal by at least one target in step S30; obtaining a subsampled first signal by sampling the first signal at a sampling frequency $f_s$ below a Nyquist rate $f_{nyq}$ in step S40; obtaining a subsampled second signal by sampling the second signal at the sampling frequency $f_s$ in step S50; and determining a range and/or a Doppler frequency by processing of the subsampled first signal and the subsampled second signal in step S60. It is noted that several steps, although illustrated in a specific order, may be executed in a different order and/or in parallel.

*Implementations in software and hardware*

It is noted that although embodiments and examples of the present disclosure were provided in terms of a method above, the corresponding devices providing the functionality described by the methods are also provided. Moreover, it is noted that any of the steps described above may be included as code instructions in a program, which may be executed by one or more processors.

For example, a device is provided for transmitting and or receiving JSC signals. The device may comprise a processing circuitry, which is configured to perform steps according to any of the above-mentioned methods. The device may further comprise a transceiver for performing wireless reception, transmission or sensing. Alternatively to the transceiver, the processing circuitry may control an external transceiver to perform wireless reception, transmission or sensing. The processing circuity may receive signals from a transceiver and/or may transmit signals to a transceiver. In other words, the processing circuitry may instruct the transceiver to receive and/or transmit signals.

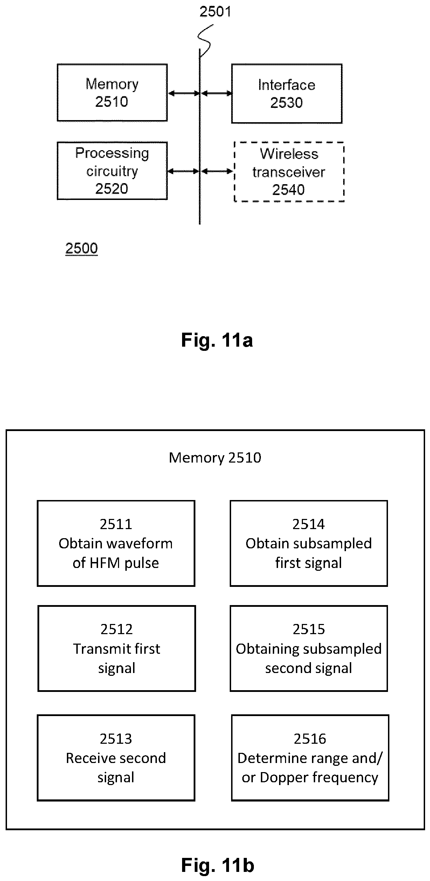

**Fig. 11a** shows an exemplary device 2500, which may implement some embodiments of the present disclosure. For example, the device may be the device for radar sensing. Such a device may include memory 2510, processing circuitry 2520, a wireless transceiver 2540, and possibly a user interface 2530. The device may be, for instance a (part of) a base station or a terminal/STA, or another device as mentioned above. Moreover, any of the above mentioned transmitting and/or receiving wireless devices may be implemented as exemplarily illustrated in Fig. 25a.

The memory 2510 may store the program, which may be executed by the processing circuitry 2520 to perform steps of any of the above-mentioned methods. The processing circuitry may comprise one or more processors and/or other dedicated or programmable hardware. The wireless transceiver 2540 may be configured to receive and/or transmit wireless signals. The transceiver 2540 may include also baseband processing which may detect, decode and interpret the data according to some standard or predefined convention. However, this is not necessary and devices with only sensing applications may implement only the lower one or two protocol layers. For example, the transceiver may be used to perform measurement, communicate with other devices such as base stations and/or terminals. The device 2500 may further include a user interface 2530 for displaying messages or status of the device, or the like and/or for receiving a user's input. A bus 2501 interconnects the memory, the processing circuitry, the wireless transceiver, and the user interface.

**Fig. 11b** shows an example of the memory 2510 in a wireless device 2500 for radar sensing, including a module 2511 for obtaining a waveform of a HFM chirp pulse in a frequency range, a module 2512 for controlling the transceiver 2540 to transmit a first signal including a plurality of HFM chirp pulses, a module 2513 for controlling the transceiver 2540 to receive a second signal, the second signal being a signal resulting from reflection of the first signal by at least one target, a module 2514 for obtaining a subsampled first signal by sampling the first signal at a sampling frequency $f_s$ below a Nyquist rate $f_{nyq}$, a module 2515 for obtaining a subsampled second signal by sampling the second signal at the sampling frequency $f_s$, and a module 2516 for determining a range and/or a Doppler frequency by processing of the subsampled first signal and the subsampled second signal.

The above examples are not intended to limit the present disclosure. There are many modifications and configurations, which may be used in addition or alternatively, as will be briefly described below.

Fig. 11b provides an exemplary implementation. A memory 2510 may include a subset of the described modules or additional modules to provide instructions to perform any of the methods described in the sections above.

This present disclosure can be used in any kind of device that is used for wireless sensing. For instance, health monitoring, activity classification, gesture recognition, people counting, through the wall sensing, emotion recognition, attention monitoring, keystrokes recognition, drawing in the air, imaging, step counting, speed estimation, sleep detection, traffic monitoring, smoking detection, metal detection, sign language recognition, humidity estimation, wheat moisture detection, fruit ripeness detection, sneeze sensing, etc. Besides these applications, the embodiments of the present disclosure can be used in JSC technologies. This disclosure can also be used for sensing applications to support communication applications, like obstacle tracking for beam management. Therefore, devices that can utilize this invention could be smart homes/offices/cities/factories/etc. devices, like electrical kitchen appliances, television sets, smart bus stops, smart office equipment (printers, etc.), lighting systems, WLAN and WiFi devices, etc. Other devices could be stand-alone wireless sensors, such as heart-rate monitors, motion detectors, smart watches, etc. Besides these applications, the invention can be used for military services such as enemy sensors, the existence of enemy devices and what they are sensing can be learned and some precaution can be taken. This disclosure can especially be used in network controllers and managing devices, such as APs, BSs, edge nodes, enhanced nodes, etc. for technologies such as CR, reconfigurable radio systems, etc.

The methodologies described herein may be implemented by various means depending upon the application. For example, these methodologies may be implemented in hardware, operation system, firmware, software, or any combination of two or all of them. For a hardware implementation, any processing circuitry 2520 may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium such as the memory 2510 or any other type of storage. The computer-readable media includes physical computer storage media, which may be any available medium that can be accessed by the computer, or, in general by the processing circuitry 2520. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems (like bistatic radar systems) and scenarios without departing from the scope as defined by the independent claim.

*Selected embodiments and examples*

Summarizing, some embodiments in the present disclosure relate to transmitting and/or receiving of sensing. A waveform of a hyperbolic frequency modulated, HFM, chirp pulse in a frequency range is obtained. A first signal including a plurality of HFM chirp pulses is transmitted. A second signal is received, wherein the second signal is a signal resulting from reflection of the first signal by at least one target. A subsampled first signal is obtained by sampling the first signal at a sampling frequency $f_s$ below a Nyquist rate $f_{nyq}$. A subsampled second signal is obtained by sampling the second signal at the sampling frequency $f_s$. A range and/or a Doppler frequency is determined by processing of the subsampled first signal and the subsampled second signal.

According to an embodiment, provided is a radar sensing method, comprising obtaining a waveform of a hyperbolic frequency modulated, HFM, chirp pulse in a frequency range; transmitting a first signal including a plurality of HFM chirp pulses; receiving a second signal, the second signal being a signal resulting from reflection of the first signal by at least one target; obtaining a subsampled first signal by sampling the first signal at a sampling frequency $f_s$ below a Nyquist rate $f_{nyq}$; obtaining a subsampled second signal by sampling the second signal at the sampling frequency $f_s$; and determining a range and/or a Doppler frequency by processing of the subsampled first signal and the subsampled second signal.

In an exemplary implementation, the processing of the subsampled first signal and the subsampled second signal includes extracting a range profile by cross-correlating each of pulses included in the subsampled second signal with a pulse included in the subsampled first signal, thereby providing range bins for the transmitted plurality of HFM chirp pulses.

For example, the processing of the subsampled first signal and the subsampled second signal further includes extracting a Doppler frequency by performing a Fourier transform along the range bins.

In an exemplary embodiment, the frequency range exhibits a bandwidth B; the Nyquist rate $f_{nyq}$ is given by $f_{nyq} = 2 \times B$; and the sampling rate $f_s$ is given by $f_s = \eta \times f_{nyq}$, with $\eta \in (0,1)$.

In an exemplary embodiment, an instantaneous frequency of each HFM chirp pulse increases monotonously with time from a lower frequency $f_L$ of the frequency range to an upper frequency $f_H$ of the frequency range or decreases monotonously with time from an upper frequency $f_H$ of the frequency range to a lower frequency $f_L$ of the frequency range.

In an exemplary embodiment, each of the HFM chirp pulses exhibits a modulating phase $\phi(t)$ proportional to $\ln(f(t))$, with $f(t)$ being a function linear in time $t$.

For example, the modulating phase is given by $\phi(t) = \frac{1}{\beta} \ln(1 + \beta f_L t)$, or $\phi(t) = -\frac{1}{\beta} \ln(1 - \beta f_H t)$, with $\beta = \frac{f_L - f_H}{f_L f_H T}$, lower frequency $f_L$ of the frequency range, upper frequency $f_H$ of the frequency range, and pulse duration $T$.

In an exemplary embodiment, the subsampled first signal and the subsampled second signal are obtained using a common analog-digital converter, ADC.

According to an embodiment, a radar sensing device is provided. The radar sensing device comprises circuitry configured to obtain a waveform of a plurality of hyperbolic frequency modulated, HFM, chirp pulse in a frequency range; a transmitter configured to transmit a first signal including a plurality of HFM chirp pulses; and a receiver configured receive a second signal, the second signal being a signal resulting from reflection of the first signal by at least one target, wherein the circuitry is further configured to obtain a subsampled first signal by sampling the first signal at a sampling frequency $f_s$ below a Nyquist rate $f_{nyq}$; obtain a subsampled second signal by sampling the second signal at the sampling frequency $f_s$; and determine a range and/or a Doppler frequency by processing of the subsampled first signal and the subsampled second signal.

In an exemplary embodiment, the radar sensing device comprises an analog-digital converter configured to convert the first signal and the second signal into the subsampled first signal and the subsampled second signal, respectively.

In an exemplary embodiment, the processing of the subsampled first signal and the subsampled second signal includes extracting a range profile by cross-correlating each of pulses included in the subsampled second signal with a pulse included in the subsampled first signal, thereby providing range bins for the transmitted plurality of HFM chirp pulses.

For example, the processing of the subsampled first signal and the subsampled second signal further includes extracting a Doppler frequency by performing a Fourier transform along the range bins.

In an exemplary embodiment, the frequency range exhibits a bandwidth $B$; the Nyquist rate $f_{nyq}$ is given by $f_{nyq} = 2 \times B$; and the sampling rate $f_s$ is given by $f_s = \eta \times f_{nyq}$, with $\eta \in (0,1)$.

In an exemplary embodiment, an instantaneous frequency of each HFM chirp pulse increases monotonously with time from a lower frequency $f_L$ of the frequency range to an upper frequency $f_H$ of the frequency range or decreases monotonously with time from an upper frequency $f_H$ of the frequency range to a lower frequency $f_L$ of the frequency range.

In an exemplary embodiment, each of the HFM chirp pulses exhibits a modulating phase $\phi(t)$ proportional to $\ln(f$

(*t*)), with *f(t)* being a function linear in time *t*.

For example, the modulating phase is given by $\phi(t)=\frac{1}{\beta}\ln(1+\beta f_L t)$, or $\phi(t)=-\frac{1}{\beta}\ln(1-\beta f_H t)$, with $\beta=\frac{f_L-f_H}{f_L f_H T}$, lower frequency $f_L$ of the frequency range, upper frequency $f_H$ of the frequency range, and pulse duration $T$.

In an exemplary embodiment, the radar sensing device comprises an analog-digital converter configured to convert the first signal and the second signal into the subsampled first signal and the subsampled second signal, respectively.

Moreover, the corresponding methods are provided including steps performed by any of the above-mentioned circuitry implementations.

Still further, a computer program is provided, stored on a non-transitory medium, and comprising code instructions which when executed by a computer or by a circuitry, performs steps of any of the above-mentioned methods.

According to some embodiments, the circuitry and/or the transceiver is embedded in an integrated circuit, IC.

Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

**Claims**

1. A radar sensing method, comprising

   obtaining a waveform of a hyperbolic frequency modulated, HFM, chirp pulse in a frequency range;
   transmitting a first signal including a plurality of HFM chirp pulses;
   receiving a second signal, the second signal being a signal resulting from reflection of the first signal by at least one target;
   obtaining a subsampled first signal by sampling the first signal at a sampling frequency $f_s$ below a Nyquist rate $f_{nyq}$;
   obtaining a subsampled second signal by sampling the second signal at the sampling frequency $f_s$; and
   determining a range and/or a Doppler frequency by processing of the subsampled first signal and the subsampled second signal.

2. The radar sensing method according to claim 1, wherein
   the processing of the subsampled first signal and the subsampled second signal includes extracting a range profile by cross-correlating each of pulses included in the subsampled second signal with a pulse included in the subsampled first signal, thereby providing range bins for the transmitted plurality of HFM chirp pulses.

3. The radar sensing method according to claim 2, wherein
   the processing of the subsampled first signal and the subsampled second signal further includes extracting a Doppler frequency by performing a Fourier transform along the range bins.

4. The radar sensing method according to any one of claims 1 to 3, wherein

   the frequency range exhibits a bandwidth *B*;
   the Nyquist rate $f_{nyq}$ is given by $f_{nyq} = 2 \times B$; and
   the sampling rate $f_s$ is given by $f_s = \eta \times f_{nyq}$, with $\eta \in (0,1)$.

5. The radar sensing method according to any one of claims 1 to 4, wherein
   an instantaneous frequency of each HFM chirp pulse increases monotonously with time from a lower frequency $f_L$ of the frequency range to an upper frequency $f_H$ of the frequency range or decreases monotonously with time from an upper frequency $f_H$ of the frequency range to a lower frequency $f_L$ of the frequency range.

6. The radar sensing method according to any one of claims 1 to 5, wherein

each of the HFM chirp pulses exhibits a modulating phase $\phi(t)$ proportional to $\ln(f(t))$, with $f(t)$ being a function linear in time $t$.

7. The radar sensing method according to claim 6, wherein

the modulating phase is given by $\phi(t) = \frac{1}{\beta}\ln(1 + \beta f_L t)$, or $\phi(t) = -\frac{1}{\beta}\ln(1 - \beta f_H t)$ with $\beta = \frac{f_L - f_H}{f_L f_H T}$, lower frequency $f_L$ of the frequency range, upper frequency $f_H$ of the frequency range, and pulse duration $T$.

8. The radar sensing method according to any one of claims 1 to 7, wherein
the subsampled first signal and the subsampled second signal are obtained using a common analog-digital converter, ADC.

9. A computer program stored in a non-transitory, computer-readable medium, the program comprising code instructions which, when executed on one or more processors, cause the one or more processors to perform steps of the method according to any of claims 1 to 8.

10. A radar sensing device, comprising

circuitry configured to obtain a waveform of a plurality of hyperbolic frequency modulated, HFM, chirp pulse in a frequency range;
a transmitter configured to transmit a first signal including a plurality of HFM chirp pulses; and
a receiver configured to receive a second signal, the second signal being a signal resulting from reflection of the first signal by at least one target, wherein
the circuitry is further configured to

obtain a subsampled first signal by sampling the first signal at a sampling frequency $f_s$ below a Nyquist rate $f_{nyq}$;
obtain a subsampled second signal by sampling the second signal at the sampling frequency $f_s$; and
determine a range and/or a Doppler frequency by processing of the subsampled first signal and the subsampled second signal.

11. The radar sensing device according to claim 10, comprising
an analog-digital converter configured to convert the first signal and the second signal into the subsampled first signal and the subsampled second signal, respectively.

WiS

```
┌─────────┐
│   Tx    │
└─────────┘
     │
     ┼── Itf
     │
┌─────────┐
│   Rx    │
└─────────┘
```

**Fig. 1**

LFM chirp

**Fig. 2a**

HFM chirp

**Fig. 2b**

**Fig. 3**

Undersampled LFM chirp

**Fig. 4a**

Undersampled HFM chirp

**Fig. 4b**

**Fig. 5**

**Fig. 6a**

**Fig. 6b**

**Fig. 7**

**Fig. 8**

**Fig. 9**

```
                    ┌─────────────────────────────┐
                    │            START            │
                    └─────────────────────────────┘
                                   │
                                   ▼
      S10         ┌─────────────────────────────┐
                  │ Obtain waveform of HFM chirp pulse │
                  └─────────────────────────────┘
                                   │
                                   ▼
      S20         ┌─────────────────────────────┐
                  │      Transmit first signal      │
                  └─────────────────────────────┘
                                   │
                                   ▼
      S30         ┌─────────────────────────────┐
                  │      Receive second signal      │
                  └─────────────────────────────┘
                                   │
                                   ▼
      S40         ┌─────────────────────────────┐
                  │    Obtain subsampled first signal   │
                  └─────────────────────────────┘
                                   │
                                   ▼
      S50         ┌─────────────────────────────┐
                  │   Obtain subsampled second signal   │
                  └─────────────────────────────┘
                                   │
                                   ▼
      S30         ┌─────────────────────────────┐
                  │Determine range and/or Doppler frequency│
                  └─────────────────────────────┘
                                   │
                                   ▼
                  ┌─────────────────────────────┐
                  │             END             │
                  └─────────────────────────────┘
```

**Fig. 10**

2501

| Memory 2510 | Interface 2530 |

| Processing circuitry 2520 | Wireless transceiver 2540 |

2500

**Fig. 11a**

Memory 2510

| 2511 Obtain waveform of HFM pulse | 2514 Obtain subsampled first signal |

| 2512 Transmit first signal | 2515 Obtaining subsampled second signal |

| 2513 Receive second signal | 2516 Determine range and/ or Dopper frequency |

**Fig. 11b**

Europäisches
Patentamt

European
Patent Office

Office européen
des brevets

# EUROPEAN SEARCH REPORT

**Application Number**

EP 24 15 6220

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2012 194043 A (MITSUBISHI ELECTRIC CORP) 11 October 2012 (2012-10-11) * paragraph [0030] - paragraph [0032] * * paragraph [0064] * ----- | 1-11 | INV. G01S7/35 G01S13/34 G01S13/536 H04B1/69 |
| A | DE 10 2017 200706 A1 (BOSCH GMBH ROBERT [DE]) 19 July 2018 (2018-07-19) * paragraph [0009] * * paragraph [0037] * ----- | 1-11 | G01S13/10 |

**TECHNICAL FIELDS SEARCHED (IPC)**

G01S
H04B

The present search report has been drawn up for all claims

| Place of search | Date of completion of the search | Examiner |
|---|---|---|
| Munich | 6 June 2024 | Töpfer, Nils-Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6220

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2024

| Patent document cited in search report | Publication date | Patent family member(s) | | Publication date |
|---|---|---|---|---|
| JP 2012194043 A | 11-10-2012 | JP | 5586507 B2 | 10-09-2014 |
| | | JP | 2012194043 A | 11-10-2012 |
| DE 102017200706 A1 | 19-07-2018 | CN | 108333581 A | 27-07-2018 |
| | | DE | 102017200706 A1 | 19-07-2018 |
| | | US | 2018203105 A1 | 19-07-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YANG, C. DORN** ; **T. MANCINI** ; **Z. TALKEN** ; **S. NAGARAJAIAH** ; **G. KENYON** ; **C. FARRAR** ; **D. MASCARENAS**. Blind identification of full-field vibration modes of output-only structures from uniformly-sampled, possibly temporally-aliased (sub-nyquist), video measurements. *Journal of Sound and Vibration*, 2017, vol. 390, 232-256